# EUROPÄISCHE PATENTANMELDUNG

(11) **EP 4 645 158 A1**
(43) Veröffentlichungstag der Anmeldung: **05.11.2025**
(21) Anmeldenummer: 25173797.9
(22) Anmeldetag: 30.04.2025
(51) Int. Cl.: G06K 19/077

(54) **CHIPMODUL FÜR EINEN KARTENFÖRMIGEN DATENTRÄGER**

(30) Priorität: 02.05.2024 DE 102024112386
(71) Anmelder: Giesecke+Devrient ePayments GmbH, 81677 München (DE)
(72) Erfinder: TARANTINO, Thomas, 81677 München (DE); KLUGE, Stefan, 81677 München (DE); RIESS, Peter, 81677 München (DE)
(74) Vertreter: LKGLOBAL Lorenz & Kopf Patentanwalt Attorney at Law PartG mbB

(57) **Zusammenfassung**

Die Erfindung betrifft ein Einsatzmodul (10) für einen kartenförmigen Datenträger (1). Das Einsatzmodul (10) umfasst eine Trägerlage (12), eine an der Trägerlage (12) angebrachte Lichtquelle (14) und ein an der Trägerlage (12) angebrachtes Chipelement (16). Die Trägerlage (12) weist eine mit dem Chipelement (16) gekoppelte Kontaktschnittstelle (18) auf, die in einem Bereich (20) einer ersten Oberfläche (22) der Trägerlage (12) angeordnet ist und beispielsweise für eine Datenübertragung mit einer externen Kommunikationsvorrichtung konfiguriert ist. Die Erfindung betrifft ferner einen kartenförmigen Datenträger (1) sowie ein Verfahren zum Herstellen eines kartenförmigen Datenträgers (1).

## Beschreibung

Die vorliegende Erfindung betrifft einen modularen Einsatz für kartenförmige Datenträger mit Beleuchtungseigenschaften. Insbesondere betrifft die Erfindung ein Einsatzmodul für einen kartenförmigen Datenträger, einen kartenförmigen Datenträger sowie ein Verfahren zum Herstellen eines kartenförmigen Datenträgers.

Kartenförmige Datenträger werden heutzutage in einer Vielzahl von Anwendungsgebieten verwendet. Beispielsweise können solche Datenträger zum bargeldlosen Bezahlen von Waren oder Dienstleistungen, zur personenbezogenen Identitätsfeststellung oder für einen Zugang zu internetbasierten Anwendungsprogrammen eingesetzt werden. Dementsprechend gibt es zum Beispiel kartenförmige Datenträger in Form von Chipkarten im Allgemeinen, Zahlungskarten, wie beispielsweise Kreditkarten oder Debitkarten, sowie Smart Cards und Personalausweis- oder Identitätskarten. Diese kartenförmigen Datenträger enthalten üblicherweise Sicherheitsmerkmale sowie Personalisierungsinformationen.

Einige kartenförmige Datenträger können Lichtquellen aufweisen, die innerhalb eines Kartenkörpers eingebettet sind, um bestimmte Beleuchtungseigenschaften für den kartenförmigen Datenträger bereitzustellen. Herstellungsverfahren für kartenförmige Datenträger mit Lichtquellen sind jedoch oftmals aufwändig und mit hohen Kosten verbunden.

Es ist eine Aufgabe der vorliegenden Erfindung, die Herstellung von kartenförmigen Datenträgern mit Beleuchtungseigenschaften zu erleichtern.

Diese Aufgabe wird durch den Gegenstand der unabhängigen Ansprüche gelöst. Weitere Merkmale der Erfindung ergeben sich aus den abhängigen Ansprüchen, der nachfolgenden Beschreibung sowie den Figuren.

Gemäß einem Aspekt ist ein Einsatzmodul für einen kartenförmigen Datenträger vorgesehen. Das Einsatzmodul umfasst eine Trägerlage, eine an der Trägerlage angebrachte Lichtquelle und ein an der Trägerlage angebrachtes Chipelement, insbesondere einen an der Trägerlage angebrachten Chip. Die Trägerlage weist eine mit dem Chipelement gekoppelte Kontaktschnittstelle auf, die in einem Bereich einer ersten Oberfläche der Trägerlage angeordnet ist und beispielsweise für eine Datenübertragung mit einer externen Kommunikationsvorrichtung konfiguriert ist.

Mit dem erfindungsgemäßen Einsatzmodul ist es möglich, verschiedene Komponenten an einer Trägerlage anzubringen, um somit ein vorab hergestelltes modulares Bauteil mit diesen Komponenten bereitzustellen, welches dann in seiner Gesamtheit in einen Kartenkörper eines kartenförmigen Datenträgers eingesetzt bzw. eingebracht wird. Das Einsatzmodul umfasst als modulares Bauteil zumindest eine Lichtquelle, das Chipelement und die Kontaktschnittstelle für den herzustellenden kartenförmigen Datenträger.

Dabei kann die Lichtquelle derart an der Trägerlage vormontiert sein, dass ein von der Lichtquelle ausgesandtes Licht in Richtung der Trägerlage und/oder durch die Trägerlage hindurch gelangt. Alternativ oder zusätzlich kann die Lichtquelle derart an der Trägerlage vormontiert sein, dass ein von der Lichtquelle ausgesandtes Licht nach der Integration des Einsatzmoduls in den Kartenkörper des kartenförmigen Datenträgers in Bereiche des Kartenkörpers hineinleuchtet, um somit quasi von innen Oberflächen oder Randbereiche des Kartenkörpers zu beleuchten und/oder zu durchleuchten.

Durch das erfindungsgemäße Einsatzmodul kann insbesondere ein Herstellungsprozess für die Herstellung von kartenförmigen Datenträgern mit Beleuchtungseigenschaften erleichtert werden, da ein aufwändiges Einbetten oder Integrieren der Lichtquelle in den Kartenkörper vermieden wird. Vielmehr kann mit dem erfindungsgemäßen Einsatzmodul eine Vormontage mehrerer Komponenten, einschließlich der Lichtquelle, des Chipelements und der Kontaktschnittstelle, außerhalb des Kartenkörpers stattfinden, wodurch auch der Kartenkörper mit wenig Aufwand separat zum Einsatzmodul gefertigt werden kann. Es ist dann lediglich noch das Vorsehen einer Aussparung im Kartenkörper erforderlich, was durch Schneiden, Stanzen, Fräsen, usw. erfolgen kann oder aber bereits bei der Herstellung des Schichtaufbaus erfolgen kann, sodass im Anschluss das Einsatzmodul in diese Aussparung eingesetzt werden kann.

Die Trägerlage kann ein Kunststoffmaterial aufweisen oder aus einem Kunststoffmaterial bestehen. Das Kunststoffmaterial ist beispielswiese Polyimid (PI). Alternativ kann die Trägerlage ein glasfaserverstärktes Epoxidharz, beispielsweise FR4, aufweisen oder aus einem solchen Material bestehen. Die Trägerlage kann eine oder mehrere Schichten umfassen, welche jeweils aus verschiedenen Materialien bestehen können. Die Trägerlage kann ein zumindest teilweise transparentes, insbesondere ein semitransparentes, oder vollständig transparentes Material aufweisen. Insbesondere kann die Trägerlage lichtdurchlässig sein, sodass das von der Lichtquelle abgegebene Licht durch die Trägerlage hindurchgelangen kann, beispielsweise in Richtung der Kontaktschnittstelle. Jedoch kann die Trägerlage in bestimmten Ausführungsformen auch lichtundurchlässig sein.

An der Trägerlage sind zumindest die Lichtquelle, das Chipelement und die Kontaktschnittstelle angebracht, beispielsweise befestigt, montiert, geklebt oder gedruckt. Das Chipelement kann über elektrische Verbindungen, zum Beispiel über Drähte, mit der Kontaktschnittstelle elektrisch gekoppelt sein. Die elektrischen Verbindungen können sich innerhalb der Trägerlage erstrecken.

Es können auch weitere Komponenten, wie beispielsweise elektrische Anschlüsse für eine Antenneneinheit an der Trägerlage angebracht sein, wobei diese Anschlüsse elektrisch mit dem Chipelement gekoppelt sein können. Solche Anschüsse können zum Anschluss einer Antenneneinheit vorgesehen sein, die in einem Kartenkörper, in den das Einsatzmodul eingesetzt wird, integriert ist.

Das Chipelement bzw. der Chip kann ein elektronisches Bauelement sein, welches an der Trägerlage befestigt ist oder in diese eingebettet ist. Das Chipelement kann einen integrierten Schaltkreis aufweisen und/oder auf einer entsprechenden Leiterplatte angeordnet sein.

Das Chipelement, die Lichtquelle und/oder die Kontaktschnittstelle können in die Trägerlage eingebettet sein, sodass sich diese Komponenten zumindest teilweise in dem Material der Trägerlage erstrecken.

Die Lichtquelle kann ein oder mehrere Leuchtelemente umfassen, die an oder innerhalb der Trägerlage angeordnet sind und jeweils Licht in bestimmte Lichtemissionsrichtungen bzw. Lichtabgaberichtungen abgeben können. Die Lichtquelle kann elektrische Energie von einer externen Energieversorgungseinheit erhalten, beispielsweise mittels kontaktloser Energieübertragung. Es ist auch möglich, dass ein Energiespeicher an der Trägerlage oder in dem kartenförmigen Datenträger, in den das Einsatzmodul eingesetzt wird, vorgesehen ist, um die Lichtquelle mit elektrischer Energie zu versorgen. In einem Beispiel dient die oben genannte Antenneneinheit zum Empfang und zur Bereitstellung von Energie.

Gemäß einer Ausführungsform weist die Trägerlage ferner eine der ersten Oberfläche gegenüberliegende, zweite Oberfläche auf und das Chipelement und/oder die Lichtquelle ist an der zweiten Oberfläche angebracht.

Das bedeutet, dass die Lichtquelle bezüglich der Trägerlage auf einer anderen Seite der Trägerlage angeordnet ist als die Kontaktschnittstelle. Die Lichtquelle kann somit durch einen Teilbereich der Trägerlage hindurchleuchten, wenn sie ihr Licht in Richtung der Kontaktschnittstelle abgibt. Dies kann dadurch erreicht werden, dass die Trägerlage in diesem Teilbereich transparent bzw. lichtdurchlässig ist oder die Trägerlage in diesem Teilbereich eine Aussparung aufweist, welche ausgehend von der Lichtquelle zur Kontaktschnittstelle durch die Trägerlage hindurchgeht. Auf diese Weise kann die Lichtquelle die Kontaktschnittstelle beleuchten und/oder diese durchleuchten, wie nachfolgend noch genauer erläutert.

Gemäß einer Ausführungsform ist die Kontaktschnittstelle in Form eines metallischen Materials ausgebildet, das sich auf der ersten Oberfläche der Trägerlage erstreckt.

Die Kontaktschnittstelle kann durch eine Metallisierung oder Metallschicht auf der ersten Oberfläche der Trägerlage gebildet sein. Die Metallisierung kann durch Aufdampfen, Drucken, usw. des metallischen Materials auf die erste Oberfläche der Trägerlage erzeugt werden. Die Kontaktschnittstelle kann für eine elektronische Kommunikation, insbesondere zur Datenübertragung, mit einer externen Kommunikationsvorrichtung konfiguriert sein.

Gemäß einer Ausführungsform ist die Lichtquelle dazu ausgeführt, Licht in Richtung des Bereichs der ersten Oberfläche der Trägerlage abzugeben, in dem die Kontaktschnittstelle angeordnet ist, um somit die Kontaktschnittstelle zumindest teilweise zu beleuchten und/ oder zu durchleuchten.

Durch das Beleuchten der Kontaktschnittstelle oder das Durchleuchten durch die Kontaktschnittstelle kann ein optisch bzw. visuell wahrnehmbarer Leuchteffekt für die Kontaktschnittstelle bereitgestellt werden. Der Leuchteffekt kann für einen Betrachter eines kartenförmigen Datenträgers, in den das Einsatzmodul integriert ist, erkennbar werden, wenn die Lichtquelle aktiviert ist und Licht abgibt. Dadurch können verschiedene visuelle Effekte an der Kontaktschnittstelle hervorgerufen werden, die als Sicherheitsmerkmal oder als Identifikationsmerkmal eines kartenförmigen Datenträgers fungieren können. Beispielsweise kann die die Kontaktschnittstelle bildende Metallisierung in bereichsweise in unterschiedlichen Dicken ausgebildet sein, wobei dünnere Bereiche der Metallisierung durchleuchtet werden oder stärker durchleuchtet werden als dickere Bereiche der Metallisierung.

Die Metallisierung kann auch Zeichen oder Logos in Form von Reliefs, Strukturen oder Gravuren in der Metallisierung aufweisen, die mittels der Lichtquelle beleuchtet und/ oder durchleuchtet werden können. Dabei können dünnere und dickere Schichtbereiche der Metallisierung vorhanden sein, die unterschiedlich stark durchleuchtet werden. Auch können Rillen oder Nuten in der Metallisierung erzeugt werden, das heißt Bereiche, wo keine Metallisierung vorliegt, die durchleuchtet werden können.

Gemäß einer Ausführungsform weist die Kontaktschnittstelle mehrere Kontaktflächen auf, wobei die Lichtquelle dazu ausgeführt ist, Licht in Richtung zumindest einer der mehreren Kontaktflächen abzugeben, um somit die zumindest eine der mehreren Kontaktflächen zu beleuchten und/ oder zu durchleuchten.

Somit können Zeichen, Logos, Formen oder dergleichen in den Kontaktflächen vorgesehen sein, die beim Beleuchten bzw. Durchleuchten mittels der Lichtquelle schichtbar oder optisch erfassbar gemacht werden können. Es kann vorgesehen sein, dass solche Zeichen, Logos, Formen oder dergleichen nur bei aktivierter Lichtquelle schichtbar oder optisch erfassbar sind.

Gemäß einer Ausführungsform weisen die mehreren Kontaktflächen einen ersten Satz von Kontaktflächen auf, die elektrisch mit dem Chipelement gekoppelt sind, und einen zweiten Satz von Kontaktflächen, die elektrisch vom Chipelement entkoppelt sind. Die Lichtquelle ist dazu ausgeführt, Licht in Richtung des zweiten Satzes von Kontaktflächen abzugeben, um somit die Kontaktflächen des zweiten Satzes von Kontaktflächen zu beleuchten und/oder zu durchleuchten.

Die Kontaktschnittstelle kann somit aus mehreren aktiven und mehreren inaktiven Kontaktflächen aufgebaut sein. Auf diese Weise ist es möglich, dass lediglich die Kontaktflächen, insbesondere die Zeichen, Logos, Formen oder dergleichen, im zweiten Satz von Kontaktflächen mittels der Lichtquelle sichtbar gemacht werden können. Mit anderen Worten können Zeichen, welche sich auf den nicht verwendeten elektrischen Kontakten, das heißt in den inaktiven oder nicht aktivierten Kontaktflächen, der Kontaktschnittstelle befinden, durch die Lichtquelle beleuchtet und/oder durchleuchtet werden.

Gemäß einer Ausführungsform weist die Kontaktschnittstelle mehrere Kontaktflächen auf, die jeweils durch Trennabschnitte voneinander getrennt sind, wobei die Lichtquelle dazu ausgeführt ist, Licht in Richtung der Trennabschnitte abzugeben, um somit die Trennabschnitte zu durchleuchten.

Die Trennabschnitte können sich in Form von vertieften Bereichen zwischen jeweils zwei benachbarten Kontaktflächen erstrecken. Sie können Ätzkanäle zwischen den Kontaktflächen der Kontaktschnittstelle bilden. Die Trennabschnitte können insbesondere eine elektrische Isolierung zwischen benachbarten Kontaktflächen darstellen. Die Trennabschnitte können durch einen Luftspalt oder durch ein elektrisch isolierendes, insbesondere transparentes, Material gebildet sein. Beispielsweise tritt das von der Lichtquelle ausgesandte Licht zwischen den Kontaktflächen und somit durch die Trennabschnitte hindurch und durchleuchtet auf diese Weise die Kontaktschnittstelle. Dagegen können die Kontaktflächen selbst lichtundurchlässig sein, sodass das Licht lediglich durch die Trennabschnitte zwischen den Kontaktflächen hindurchtritt. Es können somit die Umrisse der Kontaktflächen sichtbar werden, wenn die Lichtquelle Licht in Richtung der Kontaktschnittstelle abgibt.

Gemäß einer Ausführungsform umfasst die Lichtquelle mindestens eine lichtemittierende Diode (Light Emitting Diode, LED) oder mindestens eine organische lichtemittierende Diode (Organic Light Emitting Diode, OLED).

Die Lichtquelle kann in mehreren Bereichen an der zweiten Oberfläche der Trägerlage angebracht sein. Beispielsweise umfasst die Lichtquelle eine oder mehrere LEDs oder OLEDs die gegenüberliegend zur Kontaktschnittstelle angeordnet sind. Mit anderen Worten ist die Lichtquelle von einem Betrachter aus gesehen, der senkrecht auf die erste Oberfläche der Trägerlage schaut, zumindest teilweise oder vollständig hinter der Kontaktschnittstelle angeordnet.

Das Licht von der Lichtquelle kann dabei auf die oben bereits erläuterte Weise durch die Trägerlage hindurchgelangen, um die Kontaktschnittstelle quasi von hinten zu beleuchten und/oder um die Kontaktschnittstelle quasi von hinten zumindest bereichsweise zu durchleuchten, beispielsweise an den Trennabschnitten.

Gemäß einer Ausführungsform ist die Lichtquelle auf die Trägerlage aufgedruckt.

Ein Aufdrucken der Lichtquelle eignet sich beispielsweise für LEDs bzw. OLEDs. Dadurch kann der Herstellungsprozess des Einsatzmoduls einfach und effizient gestaltet werden. Zudem kann dadurch das Material der Trägerlage geschont werden.

Es ist jedoch auch möglich, die Lichtquelle an der Trägerlage anzukleben oder in diese einzukleben. Ebenso kann die Lichtquelle durch mechanische Befestigungsmittel, beispielsweise durch entsprechende Ausformungen wie Haken etc. an der zweiten Oberfläche der Trägerlage befestigt werden.

Gemäß einer Ausführungsform weist der Bereich der ersten Oberfläche der Trägerlage einen ersten Teilbereich und einen zweiten Teilbereich auf, wobei die Kontaktschnittstelle innerhalb des ersten Teilbereichs angeordnet ist und wobei innerhalb des zweiten Teilbereichs ein Zeichen vorgesehen ist.

Dies kann bedeuten, dass der zweite Teilbereich, in dem das Zeichen angeordnet ist, unmittelbar an den ersten Teilbereich, in dem die Kontaktschnittstelle angeordnet ist, angrenzt. Beide Teilbereiche liegen jedoch auf der ersten Oberfläche der Trägerlage. Das Zeichen kann eine bestimmte geometrische Form, wie beispielsweise ein Logo, ein Siegel, ein Schriftzug oder dergleichen darstellen Die Trägerlage kann an der Position des Zeichens eine höhere Lichtdurchlässigkeit aufweisen als in anderen Stellen des zweiten Teilbereichs. Das Zeichen kann auch in Form einer Vertiefung in oder eines Vorsprungs auf der ersten Oberfläche der Trägerlage vorgesehen sein.

Gemäß einer Ausführungsform ist die Lichtquelle dazu ausgeführt, Licht in Richtung des zweiten Teilbereichs abzugeben, in dem das Zeichen angeordnet ist, um somit das Zeichen zumindest teilweise zu beleuchten und/oder zu durchleuchten.

Das Zeichen kann zum Beispiel ein Sicherheitszeichen zur Erhöhung der Fälschungssicherheit eines kartenförmigen Datenträgers, in den das Einsatzmodul eingesetzt ist, sein. Dazu kann vorgesehen sein, dass das Zeichen lediglich dann erkennbar oder optisch erfassbar wird, wenn die Lichtquelle aktiviert ist und damit Licht in Richtung des zweiten Teilbereichs abgibt, wohingegen das Zeichen verborgen bleibt, wenn die Lichtquelle deaktiviert, d.h. ausgeschaltet, ist.

Diese Eigenschaft kann mit der oben bereits erläuterten Beleuchtung bzw. Durchleuchtung von Teilen der Kontaktschnittstelle kombiniert werden. Dazu sind beispielsweise mehrere Lichtelemente der Lichtquelle, zum Beispiel LEDs, verteilt unterhalb des ersten und des zweiten Teilbereichs angeordnet, das heißt auf der zweiten Oberfläche der Trägerlage und gegenüber dem ersten und zweiten Teilbereich.

Gemäß einer Ausführungsform ist die Lichtquelle dazu ausgeführt, elektrische Energie mittels einer kontaktlosen Energieübertragung, insbesondere über eine Nahfeldkommunikation (NFC), zu beziehen.

Im Betrieb kann der kartenförmige Datenträger, in dem das Einsatzmodul eingesetzt ist, in die Nähe einer externen Energieversorgungsvorrichtung gebracht werden, sodass drahtlos Energie von dieser externen Energieversorgungsvorrichtung zur Lichtquelle übertragen wird, um diese zum Leuchten zu bringen. Die externe Energieversorgungsvorrichtung kann zum Beispiel Teil der oben bereits erwähnten externen Kommunikationsvorrichtung sein.

Es kann auch ein Energiespeicher in dem Einsatzmodul oder in dem kartenförmigen Datenträger vorgesehen sein, welcher mittels der externen Energieversorgungsvorrichtung aufgeladen wird, sodass die Lichtquelle auch autark betrieben werden kann. Dazu kann zum Beispiel durch Verformung des Einsatzmoduls oder des kartenförmigen Datenträgers eine elektrische Verbindung zwischen dem Energiespeicher und der Lichtquelle hergestellt werden, sodass die Lichtquelle zum Leuchten gebracht wird.

Gemäß einem Aspekt ist ein kartenförmiger Datenträger vorgesehen, beispielsweise der zuvor bereits mehrfach erwähnte kartenförmige Datenträger. Der kartenförmige Datenträger umfasst einen Kartenkörper mit einer Aussparung, welche in Form einer Vertiefung in dem Kartenkörper vorgesehen ist. Der kartenförmige Datenträger umfasst ferner das Einsatzmodul, wie es hierin beschrieben ist, wobei das Einsatzmodul in die Aussparung des Kartenkörpers eingesetzt ist.

Der Kartenkörper kann eine Antenneneinheit aufweisen, welche über die zuvor bereits erwähnten Anschlüsse des Einsatzmoduls mit dem Chipelement elektrisch gekoppelt werden kann. Die Antenneneinheit kann zur drahtlosen Datenübertragung ausgeführt sein. Somit kann neben der über die Kontaktschnittstelle bereitgestellten kontaktbasierten Datenübertragung bzw. Kommunikation mit der externen Kommunikationsvorrichtung auch eine über die Antenneneinheit bereitgestellte drahtlose Datenübertragung bzw. Kommunikation mit der externen Kommunikationsvorrichtung erfolgen. Es kann sich bei dem kartenförmigen Datenträger damit um eine sog. Dual-Interface-Karte handeln.

Gemäß einer Ausführungsform umfasst der Kartenkörper eine zumindest teilweise lichtdurchlässige Schicht, wobei die Lichtquelle dazu ausgeführt ist, Licht in Richtung der zumindest teilweise lichtdurchlässigen Schicht abzugeben und wobei die zumindest teilweise lichtdurchlässige Schicht dazu ausgeführt ist, das von der Lichtquelle abgegebene Licht zumindest teilweise zu einer Oberfläche des Kartenkörpers oder zu einem Randbereich des Kartenkörpers durchzulassen bzw. durchzuleiten.

Die Lichtquelle kann Licht somit auch in das Innere des Kartenkörpers des kartenförmigen Datenträgers abgeben und innere Teile des Kartenkörpers beleuchten bzw. durchleuchten. Durch geeignete Austrittsöffnungen in der Oberfläche oder an Rändern des Kartenkörpers kann dieses Licht dann aus dem Kartenkörper austreten und für einen Betrachter sichtbar werden. Solche Konfigurationen der Lichtquelle können mit den oben genannten Konfigurationen, bei denen Licht in Richtung des Bereichs der ersten Oberfläche der Trägerlage abgegeben wird, kombiniert werden. Die Lichtquelle kann insbesondere in verschiedene Richtungen ausgerichtet sein, um verschiedene Bereiche im Inneren des Kartenkörpers zu beleuchten und/oder zu durchleuchten. Solche Ausrichtungen der Lichtquelle werden in der Figurenbeschreibung noch genauer erläutert.

Gemäß einem Beispiel ist eine Verwendung des hierin beschriebenen kartenförmigen Datenträgers als Ausweisdokument, Identitätsdokument, Chipkarte oder Bezahlkarte angegeben. Der kartenförmige Datenträger kann zum Beispiel eine Chipkarte, eine Smart Card, eine Personalausweis- oder Identitätskarte, eine Zahlungskarte, wie beispielsweise eine Kreditkarte oder eine Debitkarte, sein.

Gemäß einem Aspekt ist ein Verfahren zum Herstellen eines kartenförmigen Datenträgers, beispielsweise des zuvor bereits erwähnten kartenförmigen Datenträgers, vorgesehen. In einem Schritt des Verfahrens erfolgt ein Bereitstellen eines Kartenkörpers mit einer Aussparung, die in Form einer Vertiefung in einer Oberfläche des Kartenkörpers vorgesehen ist. In einem weiteren Schritt erfolgt ein Bereitstellen einer Trägerlage. In einem weiteren Schritt erfolgt ein Anbringen einer Lichtquelle, eines Chipelements und einer Kontaktschnittstelle an der Trägerlage. In einem weiteren Schritt erfolgt ein Einbringen der Trägerlage in die Aussparung des Kartenkörpers, zeitlich nachdem die Lichtquelle, das Chipelement und die Kontaktschnittstelle an der Trägerlage angebracht wurden.

Ausführungsbeispiele der Erfindung werden nachfolgend anhand schematischer Zeichnungen näher erläutert.

Dabei zeigen:
- Fig. 1: ein Einsatzmodul für einen kartenförmigen Datenträger.
- Fig. 2: eine Draufsicht auf eine Kontaktschnittstelle des Einsatzmoduls aus Fig. 1.
- Fig. 3: einen eine Kontaktschnittstelle und ein Zeichen aufweisenden Bereich einer ersten Oberfläche einer Trägerlage des Einsatzmoduls aus Fig. 1.
- Fig. 4: einen eine Kontaktschnittstelle und ein alternatives Zeichen aufweisenden Bereich einer ersten Oberfläche einer Trägerlage des Einsatzmoduls aus Fig. 1.
- Fig. 5: einen Ausschnitt eines Kartenkörpers mit dem Einsatzmodul aus Fig. 1.
- Fig. 6: einen Ausschnitt eines alternativen Kartenkörpers mit dem Einsatzmodul aus Fig. 1.
- Fig. 7: einen Ausschnitt eines weiteren alternativen Kartenkörpers mit dem Einsatzmodul aus Fig. 1.
- Fig. 8: einen kartenförmigen Datenträger mit dem Einsatzmodul aus Fig. 1.
- Fig. 9: ein Flussdiagramm für ein Verfahren zum Herstellen eines kartenförmigen Datenträgers.

In den Figuren werden gleiche oder funktionsgleiche Elemente mit den gleichen Bezugszeichen versehen.

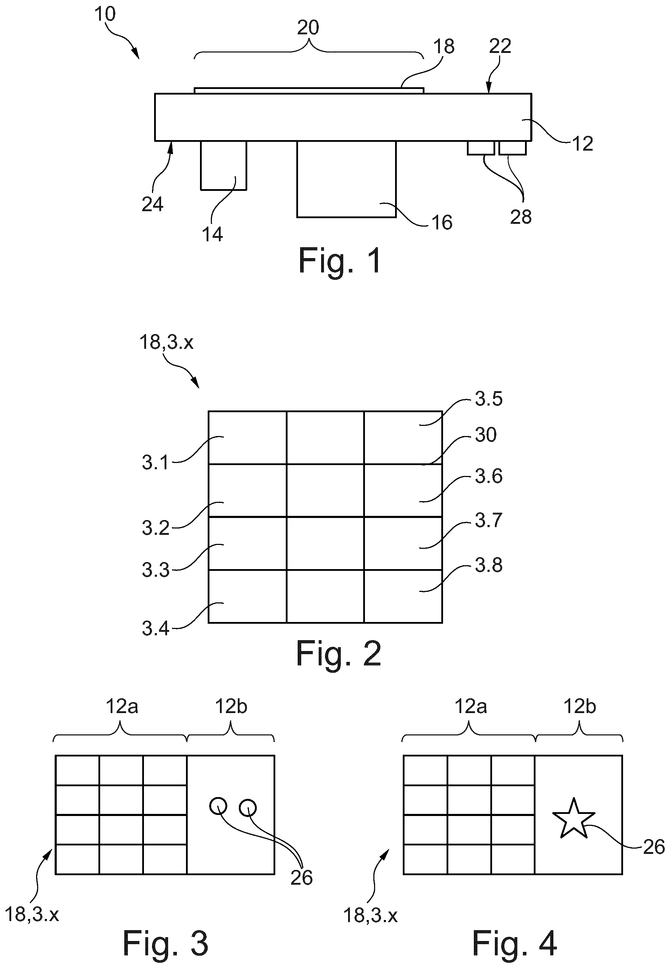

Fig. 1 zeigt ein Einsatzmodul 10 für einen kartenförmigen Datenträger. Das Einsatzmodul 10 umfasst eine Trägerlage 12, eine an der Trägerlage 12 angebrachte Lichtquelle 14 und ein an der Trägerlage 12 angebrachtes Chipelement 16, insbesondere einen an der Trägerlage 12 angebrachten Chip 16. Die Trägerlage 12 weist eine mit dem Chipelement 16 gekoppelte Kontaktschnittstelle 18 auf, die in einem Bereich 20 einer ersten Oberfläche 22 der Trägerlage 12 angeordnet ist und für eine Datenübertragung mit einer externen Kommunikationsvorrichtung (nicht dargestellt) konfiguriert ist.

Die Trägerlage 12 weist eine der ersten Oberfläche 22 gegenüberliegende, zweite Oberfläche 24 auf, wobei in diesem Beispiel sowohl das Chipelement 16 als auch die Lichtquelle 14 an der zweiten Oberfläche 24 vorgesehen sind. Das Chipelement 16 und/oder die Lichtquelle 14 können zum Beispiel auf die zweite Oberfläche 24 aufgeklebt sein. Jedoch ist es auch möglich, dass insbesondere die Lichtquelle 14 auf die zweite Oberfläche 24 aufgedruckt ist.

Die Trägerlage 12 kann eine Kunststoffschicht, beispielsweise eine Polyimidschicht, oder eine glasfaserverstärkte Epoxidharzschicht, beispielsweise FR4, sein. Die Trägerlage 12 kann in Form einer Folie vorliegen und/oder kann transparent sein. Beispielsweise ist die Trägerlage 12 zumindest teilweise lichtdurchlässig, um Licht, welches von der Lichtquelle 14 ausgesandt wird, in Richtung der ersten Oberfläche 22 der Trägerlage 12 und damit durch die Trägerlage 12 hindurchzuleiten.

Die Kontaktschnittstelle 18 kann in Form eines metallischen Materials, hier in Form einer Metallisierung, auf der ersten Oberfläche 22 der Trägerlage 12 ausgebildet sein. Die Kontaktschnittstelle 18 umfasst elektrische Kontakte, beispielsweise Kontaktflächen, über welche eine elektrische Kontaktierung mit der externen Kommunikationsvorrichtung (nicht dargestellt) hergestellt werden kann.

Es können auch weitere Komponenten, wie beispielsweise die in Fig. 1 dargestellten elektrische Anschlüsse 28 vorgesehen sein, über welche das Chipelement 16 mit einer Antenneneinheit (nicht dargestellt) verbunden werden kann. Die Antenneneinheit kann sich beispielsweise in einem Kartenkörper befinden, in den das Einsatzmodul 10 während der Herstellung eines kartenförmigen Datenträgers eingesetzt wird.

Das von der Lichtquelle 14 ausgesandte Licht kann in Richtung des Bereichs 20 der ersten Oberfläche 22 der Trägerlage 12 abgegeben werden, in dem die Kontaktschnittstelle 18 angeordnet ist, um somit die Kontaktschnittstelle 18 zumindest teilweise zu beleuchten und/oder zu durchleuchten. Wie eine solche Beleuchtung bzw. Durchleuchtung der Kontaktschnittstelle 18 erfolgen kann, wird im Folgenden mit Bezug zur Fig. 2 erläutert.

Fig. 2 zeigt eine Draufsicht auf die Kontaktschnittstelle 18 des Einsatzmoduls 10 aus Fig. 1. Die Kontaktschnittstelle 18 weist mehrere Kontaktflächen 3.x auf und die Lichtquelle 14 (vgl. Fig. 1) ist dazu ausgeführt, Licht in Richtung der Kontaktflächen 3.x der Kontaktschnittstelle 18 abzugeben, um somit die Kontaktflächen 3.x zu beleuchten und/oder zu durchleuchten. In diesem Beispiel weist die Kontaktschnittstelle 18 zumindest acht Kontaktflächen 3.x auf, nämlich die Kontaktflächen 3.1, 3.2, 3.3, 3.4, 3.5, 3.6, 3.7 und 3.8. Dabei kann durch eine bestimmte Anordnung oder Konfiguration der Lichtquelle 14 eine Beleuchtung und/oder Durchleuchtung von lediglich einer oder von einigen der Kontaktflächen 3.x erfolgen. Beispielsweise können mehrere Leuchtelemente, wie LEDs oder OLEDs, auf der zweiten Oberfläche 24 der Trägerlage 12 (vgl. Fig. 1) angeordnet sein, wobei jeweils ein Leuchtelement hinter einer zu beleuchtenden bzw. durchleuchtenden Kontaktfläche 3.x angeordnet ist.

In einem Beispiel sind die Kontaktflächen 3.x in einen ersten Satz von Kontaktflächen 3.1, 3.2, 3.3, 3.5, 3.7 und einen zweiten Satz von Kontaktflächen 3.4, 3.6, 3.8 eingeteilt. Die Kontaktflächen 3.1, 3.2, 3.3, 3.5, 3.7 des ersten Satzes sind elektrisch mit dem Chipelement 16 (vgl. Fig. 1) gekoppelt, wohingegen die Kontaktflächen 3.4, 3.6, 3.8 des zweiten Satzes elektrisch vom Chipelement 16 entkoppelt sind.

Die Lichtquelle 14 (vgl. Fig. 1) kann nun so konfiguriert oder angeordnet sein, dass Licht lediglich in Richtung des zweiten Satzes von Kontaktflächen 3.4, 3.6, 3.8 abgegeben wird, um somit die Kontaktflächen 3.4, 3.6, 3.8 des zweiten Satzes zu beleuchten und/oder zu durchleuchten. Es kann jeweils ein Zeichen, beispielsweise ein Logo, eine Zahl oder ein Buchstabe erkennbar sein, wenn die Kontaktflächen 3.4, 3.6, 3.8 beleuchtet und/oder durchleuchtet werden. Dieser optische Effekt kann durch eine Strukturierung der Metallschicht, insbesondere vertiefte Bereiche in der Metallschicht der Kontaktflächen 3.4, 3.6, 3.8 erzeugt werden.

Wie ebenfalls in Fig. 2 zu erkennen ist, sind die Kontaktflächen 3.x jeweils durch Trennabschnitte 30 voneinander getrennt. Die Trennabschnitte können sich in Form von vertieften Bereichen zwischen jeweils zwei benachbarten Kontaktflächen 3.x erstrecken. In Fig. 2 ist der Übersichtlichkeit halber nur der Trennabschnitt 30 zwischen der Kontaktfläche 3.5 und der Kontaktfläche 3.6 gekennzeichnet. Die weiteren Trennabschnitte 30 zwischen den anderen Kontaktflächen 3.x sind jedoch ebenfalls zu erkennen. Die Trennabschnitte 30 können insbesondere eine elektrische Isolierung zwischen benachbarten Kontaktflächen 3.x darstellen. Die Trennabschnitte 30 können durch einen Luftspalt oder durch ein elektrisch isolierendes Material gebildet sein.

Die Lichtquelle 14 kann nun dazu ausgeführt sein, Licht in Richtung der Kontaktschnittstelle 18 derart abzugeben, dass lediglich die Trennabschnitte 30 durchleuchtet werden. Beispielsweise tritt das von der Lichtquelle 14 ausgesandte Licht zwischen den Kontaktflächen 3.x und somit durch die Trennabschnitte 30 hindurch und durchleuchtet auf diese Weise die Kontaktschnittstelle 18. Die Kontaktflächen 3.x selbst können dabei vollständig lichtundurchlässig sein, sodass das Licht lediglich durch die Trennabschnitte 30 zwischen den Kontaktflächen 3.x hindurchtritt. Es können somit die Umrisse der Kontaktflächen 3.x sichtbar werden, wenn die Lichtquelle 14 Licht in Richtung der Kontaktschnittstelle 18 abgibt.

Fig. 3 zeigt einen Bereich der ersten Oberfläche 22 der Trägerlage 12 des Einsatzmoduls 10 aus Fig. 1, welcher einen ersten Teilbereich 12a mit der Kontaktschnittstelle 18 und einen zweiten Teilbereich 12b mit einem Zeichen 26 aufweist. Das Zeichen 26 ist in Fig. 3 in Form von zwei Kreisen vorgesehen, die Vertiefungen oder Löcher in der Oberfläche 22 der Trägerlage 12 darstellen. Die Vertiefungen können teilweise bzw. die Löcher können vollständig durch die Trägerlage 12 hindurchgehen, sodass jedenfalls eine Lichtdurchlässigkeit an der Position des Zeichens 26 größer ist als an anderen Stellen des zweiten Teilbereichs 12b. Somit wird das Zeichen 26 optisch erfassbar oder für einen Betrachter visuell wahrnehmbar, wenn die Lichtquelle 14 aktiviert ist und Licht durch die Vertiefungen bzw. Löcher hindurch abgibt. Die mit Bezug zur Fig. 2 beschriebene Beleuchtung oder Durchleuchtung von Teilen der Kontaktschnittstelle 18 im ersten Teilbereich 12a kann mit der Beleuchtung bzw. Durchleuchtung des Zeichens 26 im zweiten Teilbereich 12b kombiniert werden.

Fig. 4 zeigt ein alternatives Beispiel zu dem in Fig. 3 erläuterten Beispiel. Es gilt das zur Fig. 3 gesagte analog, wobei das Zeichen 26 hier in Form eines Sterns vorliegt. An der Position des Zeichens 26 kann sich das Material der Trägerlage 12 von dem Material der Trägerlage 12 an anderen Stellen des zweiten Teilbereichs 12b unterscheiden und/oder eine andere Farbe aufweisen. Auf diese Weise kann das Zeichen 26 in einer anderen Farbe erleuchten, wenn die Lichtquelle 14 aktiviert ist.

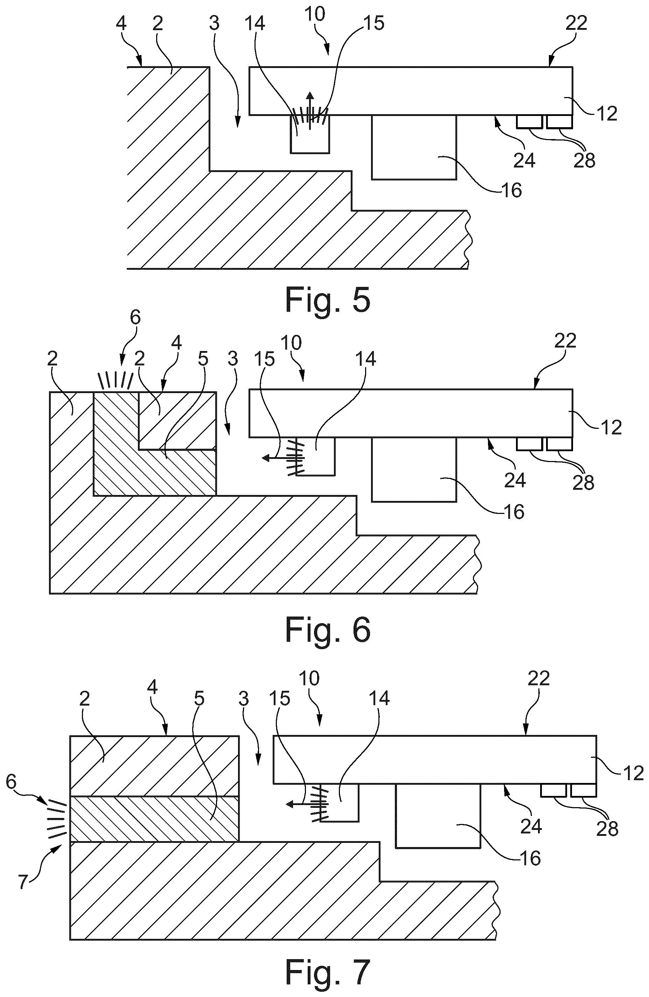

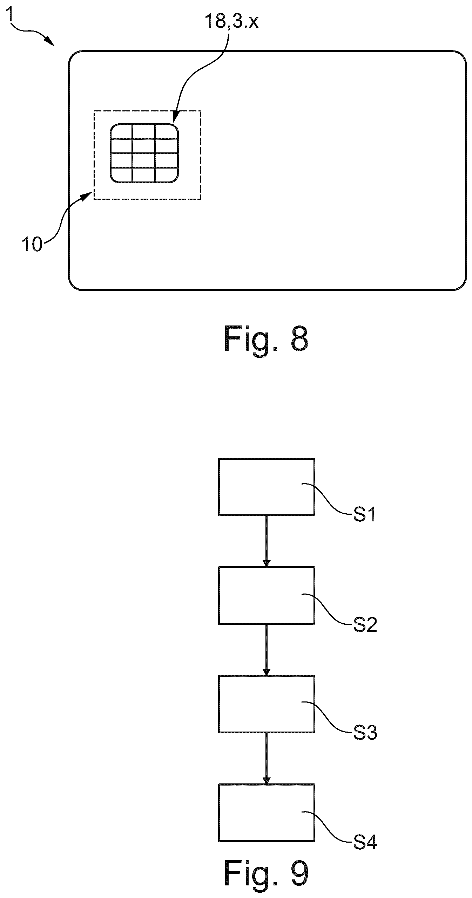

Fig. 5 zeigt einen Ausschnitt eines Kartenkörpers 2 mit dem Einsatzmodul 10 aus Fig. 1. Der Kartenkörper 2 kann Teil des kartenförmigen Datenträgers 1 sein, der in Fig. 8 dargestellt ist. Der Kartenkörper 2 weist eine Aussparung 3 auf, welche in Form einer Vertiefung in dem Kartenkörper 2 vorgesehen ist. Die Vertiefung kann eine gestufte Vertiefung sein, wie in Fig. 5 dargestellt. Das Einsatzmodul 10 ist hier in die Aussparung 3 eingesetzt, wobei dies lediglich eine schematische Darstellung ist, in der aus Gründen der besseren Erkennbarkeit Lücken zwischen dem Einsatzmodul 10 und dem Kartenkörper 2 vorgesehen sind. Das Einsatzmodul 10 kann nach dem Einsetzen in den Kartenkörper 2 insbesondere direkt an den Innenflächen der Vertiefung anliegen bzw. die in Fig. 3 noch erkennbaren Lücken können durch ein Material verschlossen bzw. ausgefüllt sein. Wenn das Einsatzmodul 10 in die Aussparung 3 des Kartenkörpers 2 eingesetzt ist, können die erste Oberfläche 22 der Trägerlage 12 und eine erste Oberfläche 4 des Kartenkörpers 2 im Wesentlichen bündig oder fluchtend verlaufen.

Das Einsatzmodul 10 ist derart in der Aussparung 3 angeordnet, dass die auf der zweiten Oberfläche 24 der Trägerlage 12 angeordnete Lichtquelle 14, das Chipelement 16 und die Anschlüsse 28 den Innenflächen der Aussparung 3 zugewandt sind. Die hier nicht dargestellte Kontaktschnittstelle 18 (vgl. Fig. 1) ist auf der ersten Oberfläche 22 der Trägerlage 12 angeordnet und weist damit vom Kartenkörper 2 weg, das heißt nach außen. Die Kontaktschnittstelle 18 kann in einer kleinen Aussparung an der ersten Oberfläche 22 der Trägerlage 12 angeordnet sein, sodass sich eine ebene erste Oberfläche 22 der Trägerlage 12 ergibt.

In dem in Fig. 5 dargestellten Beispiel gibt die Lichtquelle 14 des Einsatzmoduls 10 Licht in der durch den Pfeil 15 gekennzeichneten Richtung, das heißt in Richtung der Trägerlage 12 bzw. der ersten Oberfläche 22 der Trägerlage 12 ab, um die hier nicht dargestellte Kontaktfläche 18 (vgl. Fig. 1) auf die zuvor erläuterte Weise zu beleuchten und/oder zu durchleuchten. Somit kann ein Betrachter des kartenförmigen Datenträgers die mit der Kontaktschnittstelle 18 zusammenwirkenden Leuchteffekte von außen wahrnehmen.

Fig. 6 zeigt nun einen Ausschnitt eines alternativen Kartenkörpers 2 mit dem Einsatzmodul 10 aus Fig. 1. Es gilt das zur Figur 5 gesagte analog, allerdings mit dem Unterschied, dass die Lichtquelle 14 hier nun zusätzlich oder alternativ Licht in Richtung einer zumindest teilweise lichtdurchlässigen Schicht 5 des Kartenkörpers 2 abgibt. Das bedeutet, dass bei dem in Fig. 6 dargestellten Beispiel die Lichtquelle 14 des Einsatzmoduls 10 Licht in der durch den Pfeil 15 gekennzeichneten Richtung, das heißt in Richtung der zumindest teilweise lichtdurchlässigen Schicht 5 abgibt. Die zumindest teilweise lichtdurchlässige Schicht 5 kann dieses Licht durch den Kartenkörper 2 hindurchleiten, wobei das lichtdurchlässige Material der Schicht 5 einen oder mehrere Abzweige bzw. Kanäle zur ersten Oberfläche 4 des Kartenkörpers 2 bildet. In Fig. 6 ist ein solcher Abzweig zur ersten Oberfläche 4 des Kartenkörpers 2 beispielhaft dargestellt. Auf diese Weise kann das durch die Schicht 5 hindurchgeleitete Licht an einem Lichtaustrittsbereich 6, der sich an der ersten Oberfläche 4 des Kartenkörpers 2 befindet, aus dem Kartenkörper 2 austreten. In diesem Ausführungsbeispiel ist die Trägerlage 12 vorzugsweise lichtundurchlässig. Insbesondere kann hier das gesamte von der Lichtquelle 14 abgegebene Licht in den Kartenkörper 2 hineingerichtet sein, bevor es an besagtem Lichtaustrittsbereich 6 wieder aus dem Kartenkörper 2 austritt.

Es ist auch möglich, dass sich der Lichtaustrittsbereich 6 an einer in Fig. 6 nicht dargestellten zweiten Oberfläche des Kartenkörpers 2 befindet und das Licht damit an der zweiten Oberfläche des Kartenkörpers 2 aus dem Kartenkörper 2 austritt. Diese zweite Oberfläche ist dabei eine der ersten Oberfläche 4 gegenüberliegende Oberfläche des Kartenkörpers 2, die sich in dem in Fig. 6 dargestellten. Beispiel in einem weiter unten befindlichen, nicht dargestellten Bereich des Kartenkörpers 2 befindet. Die Lichtquelle 14 kann hierfür zum Beispiel auch nach unten gerichtet sein.

Fig. 7 zeigt nun einen Ausschnitt eines weiteren alternativen Kartenkörpers 2 mit dem Einsatzmodul 10 aus Fig. 1. Es gilt das zur Figur 5 gesagte analog, allerdings mit dem Unterschied, dass die Lichtquelle 14 hier nun, wie auch in Fig. 6, zusätzlich oder alternativ das Licht in Richtung einer zumindest teilweise lichtdurchlässigen Schicht 5 des Kartenkörpers 2 abgibt. Das bedeutet, dass bei dem in Fig. 7 dargestellten Beispiel die Lichtquelle 14 des Einsatzmoduls 10 Licht in der durch den Pfeil 15 gekennzeichneten Richtung, das heißt in Richtung der zumindest teilweise lichtdurchlässigen Schicht 5 abgibt. Die zumindest teilweise lichtdurchlässige Schicht 5 kann dieses Licht durch den Kartenkörper 2 hindurchleiten, wobei das Licht hier anders als in Fig. 6 zu einem Randbereich 7 des Kartenkörpers 2 durchgeleitet wird. Auf diese Weise kann das durch die Schicht 5 hindurchgeleitete Licht an einem Lichtaustrittsbereich 6, der sich an dem Randbereich 7 des Kartenkörpers 2 befindet, aus dem Kartenkörper 2 austreten. Der Randbereich 7 kann beispielsweise ein äußerer umlaufender Rand des kartenförmigen Datenträgers sein, in den das Einsatzmodul 10 eingesetzt ist. Auch in diesem Ausführungsbeispiel ist die Trägerlage 12 vorzugsweise lichtundurchlässig. Insbesondere kann hier das gesamte von der Lichtquelle 14 abgegebene Licht in den Kartenkörper 2 hineingerichtet sein, bevor es an besagtem Lichtaustrittsbereich 6 wieder aus dem Kartenkörper 2 austritt.

Fig. 8 zeigt nun einen solchen kartenförmigen Datenträger 1 mit dem Einsatzmodul 10 aus Fig. 1. Die Position des Einsatzmoduls 10 im kartenförmigen Datenträger ist durch das gestrichelte Rechteck gekennzeichnet. Die Kontaktschnittstelle 18 des Einsatzmoduls 10 mit ihren Kontaktflächen 3.x befindet sich an einer äußeren Oberfläche des kartenförmigen Datenträgers 1.

Fig. 9 zeigt ein Flussdiagramm für ein Verfahren zum Herstellen eines kartenförmigen Datenträgers, beispielsweise des kartenförmigen Datenträgers 1 aus Fig. 8, welcher das Einsatzmodul aus Fig. 1 aufweist. In einem Schritt S1 erfolgt ein Bereitstellen eines Kartenkörpers 2 mit einer Aussparung 3, die in Form einer Vertiefung in einer Oberfläche 4 des Kartenkörpers 2 vorgesehen ist. In einem Schritt S2 erfolgt ein Bereitstellen einer Trägerlage 12. In einem Schritt S3 erfolgt ein Anbringen einer Lichtquelle 14, eines Chipelements 16 und einer Kontaktschnittstelle 18 an der Trägerlage 12. In einem Schritt S4 erfolgt ein Einbringen der Trägerlage 12 in die Aussparung 3 des Kartenkörpers 2, nachdem die Lichtquelle 14, das Chipelement 16 und die Kontaktschnittstelle 18 an der Trägerlage 12 angebracht wurden S4. Der Schritt S1 kann vor oder nach den Schritten S2 und S3 ausgeführt werden.

## Patentansprüche

1. Einsatzmodul (10) für einen kartenförmigen Datenträger (1), umfassend:
eine Trägerlage (12);
eine an der Trägerlage (12) angebrachte Lichtquelle (14);
ein an der Trägerlage (12) angebrachtes Chipelement (16);
wobei die Trägerlage (12) eine mit dem Chipelement (16) gekoppelte Kontaktschnittstelle (18) aufweist, die in einem Bereich (20) einer ersten Oberfläche (22) der Trägerlage (12) angeordnet ist.

2. Einsatzmodul (10) nach Anspruch 1,
wobei die Trägerlage (12) ferner eine der ersten Oberfläche (22) gegenüberliegende, zweite Oberfläche (24) aufweist;
wobei das Chipelement (16) und/oder die Lichtquelle (14) an der zweiten Oberfläche (24) angebracht ist.

3. Einsatzmodul (10) nach einem der vorhergehenden Ansprüche,
wobei die Kontaktschnittstelle (18) in Form eines metallischen Materials ausgebildet ist, das sich auf der ersten Oberfläche (22) der Trägerlage (12) erstreckt.

4. Einsatzmodul (10) nach einem der vorhergehenden Ansprüche,
wobei die Lichtquelle (14) dazu ausgeführt ist, Licht in Richtung des Bereichs (20) der ersten Oberfläche (22) der Trägerlage (12) abzugeben, in dem die Kontaktschnittstelle (18) angeordnet ist, um somit die Kontaktschnittstelle (18) zumindest teilweise zu beleuchten und/oder zu durchleuchten.

5. Einsatzmodul (10) nach einem der vorhergehenden Ansprüche,
wobei Kontaktschnittstelle (18) mehrere Kontaktflächen (3.x) aufweist;
wobei die Lichtquelle (14) dazu ausgeführt ist, Licht in Richtung zumindest einer der mehreren Kontaktflächen (3.x) abzugeben, um somit die zumindest eine der mehreren Kontaktflächen (3.x) zu beleuchten und/oder zu durchleuchten.

6. Einsatzmodul (10) nach Anspruch 5,
wobei die mehreren Kontaktflächen (3.x) einen ersten Satz von Kontaktflächen (3.1, 3.2, 3.3, 3.5, 3.7) aufweisen, die elektrisch mit dem Chipelement (16) gekoppelt sind;
wobei die mehreren Kontaktflächen (3.x) einen zweiten Satz von Kontaktflächen (3.4, 3.6, 3.8) aufweisen, die elektrisch vom Chipelement (16) entkoppelt sind;
wobei die Lichtquelle (14) dazu ausgeführt ist, Licht in Richtung des zweiten Satzes von Kontaktflächen (3.4, 3.6, 3.8) abzugeben, um somit die Kontaktflächen (3.4, 3.6, 3.8) des zweiten Satzes von Kontaktflächen (3.4, 3.6, 3.8) zu beleuchten und/oder zu durchleuchten.

7. Einsatzmodul (10) nach einem der vorhergehenden Ansprüche,
wobei die Kontaktschnittstelle (18) mehrere Kontaktflächen (3.x) aufweist, die jeweils durch Trennabschnitte (30) voneinander getrennt sind;
wobei die Lichtquelle (14) dazu ausgeführt ist, Licht in Richtung der Trennabschnitte (30) abzugeben, um somit die Trennabschnitte (30) zu durchleuchten.

8. Einsatzmodul (10) nach einem der vorhergehenden Ansprüche,
wobei die Lichtquelle (14) mindestens eine lichtemittierende Diode (LED) oder mindestens eine organische lichtemittierende Diode (OLED) umfasst.

9. Einsatzmodul (10) nach einem der vorhergehenden Ansprüche, wobei die Lichtquelle (14) auf die Trägerlage (12) aufgedruckt ist.

10. Einsatzmodul (10) nach einem der vorhergehenden Ansprüche,
wobei der Bereich (20) der ersten Oberfläche (22) der Trägerlage (12) einen ersten Teilbereich (12a) und einen zweiten Teilbereich (12b) aufweist;
wobei die Kontaktschnittstelle (18) innerhalb des ersten Teilbereichs (12a) angeordnet ist;
wobei innerhalb des zweiten Teilbereichs (12b) ein Zeichen (26) vorgesehen ist.

11. Einsatzmodul (10) nach Anspruch 10,
wobei die Lichtquelle (14) dazu ausgeführt ist, Licht in Richtung des zweiten Teilbereichs (12b) abzugeben, in dem das Zeichen (26) angeordnet ist, um somit das Zeichen (26) zumindest teilweise zu beleuchten und/oder zu durchleuchten.

12. Einsatzmodul (10) nach einem der vorhergehenden Ansprüche,
wobei die Lichtquelle (14) dazu ausgeführt ist, elektrische Energie mittels einer kontaktlosen Energieübertragung, insbesondere über eine Nahfeldkommunikation (NFC), zu beziehen.

13. Kartenförmiger Datenträger (1), umfassend:
einen Kartenkörper (2) mit einer Aussparung (3), welche in Form einer Vertiefung in dem Kartenkörper (2) vorgesehen ist;
ein Einsatzmodul (10) nach einem der vorhergehenden Ansprüche;
wobei das Einsatzmodul (10) in die Aussparung (3) des Kartenkörpers (2) eingesetzt ist.

14. Kartenförmiger Datenträger (1) nach Anspruch 13,
wobei der Kartenkörper (2) eine zumindest teilweise lichtdurchlässige Schicht (5) umfasst;
wobei die Lichtquelle (14) dazu ausgeführt ist, Licht in Richtung der zumindest teilweise lichtdurchlässigen Schicht (5) abzugeben;
wobei die zumindest teilweise lichtdurchlässige Schicht (5) dazu ausgeführt ist, das von der Lichtquelle (14) abgegebene Licht zumindest teilweise zu einer Oberfläche (4) des Kartenkörpers (2) oder zu einem Randbereich (7) des Kartenkörpers (2) durchzulassen.

15. Verfahren zum Herstellen eines kartenförmigen Datenträgers (1), umfassend:
Bereitstellen eines Kartenkörpers (2) mit einer Aussparung (3), die in Form einer Vertiefung in einer Oberfläche (4) des Kartenkörpers (2) vorgesehen ist (S1);
Bereitstellen einer Trägerlage (12, S2);
Anbringen einer Lichtquelle (14), eines Chipelements (16) und einer Kontaktschnittstelle (18) an der Trägerlage (12, S3);
Einbringen der Trägerlage (12) in die Aussparung (3) des Kartenkörpers (2), nachdem die Lichtquelle (14), das Chipelement (16) und die Kontaktschnittstelle (18) an der Trägerlage (12) angebracht wurden (S4).
